# EUROPÄISCHE PATENTANMELDUNG

(11) **EP 4 736 624 A1**
(43) Veröffentlichungstag der Anmeldung: **06.05.2026**
(21) Anmeldenummer: 25190510.5
(22) Anmeldetag: 18.07.2025
(51) Int. Cl.: A01D 34/66

(54) **LANDWIRTSCHAFTLICHES ANBAUGERÄT WIE MÄHMASCHINE ODER MERGER**

(30) Priorität: 22.08.2024 DE 102024124080
(71) Anmelder: Pöttinger Landtechnik GmbH, 4710 Grieskirchen (AT)
(72) Erfinder: DIETACHMAIR, Andreas, 4710 Grieskirchen (AT); FREIMÜLLER, Florian, 4710 Grieskirchen (AT); GREIFENEDER, August, 4710 Grieskirchen (AT); REININGER, Markus, 4710 Grieskirchen (AT)
(74) Vertreter: Lorenz Seidler Gossel Part. mbB

(57) **Zusammenfassung**

Die vorliegende Erfindung betrifft ein landwirtschaftliches Anbaugerät, insbesondere in Form einer Mähmaschine oder eines Mergers, mit einem über den Boden zu führenden Arbeitsaggregat sowie einer Aufhängung zum im Arbeitsbetrieb höhenbeweglichen Aufhängen des Arbeitsaggregats, wobei die Aufhängung einen Anbaubock mit Befestigungsmitteln zum Befestigen an einem Schlepper oder einem damit verbundenen Rahmen sowie eine erste Lenkergruppe besitzt, die vom Anbaubock auskragt und ein Viergelenk bildet, das mit zwei Gelenken am Anbaubock schwenkbar gelagert ist und eine zweite Lenkergruppe trägt, an der das Arbeitsaggregat befestigt ist, sowie mit einer Entlastungseinrichtung zum Gewichtsentlasten des Arbeitsaggregats, die einen längenveränderbaren Kraftgeber in Form eines Federbeins und/oder eines Druckmittelzylinders aufweist, wobei der Kraftgeber auf Druck belastet an der ersten Lenkergruppe verbaut ist derart, dass der Kraftgeber bei sich absenkender erster Lenkerbaugruppe eine Verkürzung erfährt und sich der Hebelarm des Kraftgebers bezüglich des von der ersten Lenkergruppe gebildeten Viergelenks verkleinert.

## Beschreibung

Die vorliegende Erfindung betrifft ein landwirtschaftliches Anbaugerät zum Anbau an einen Schlepper, insbesondere in Form einer Mähmaschine oder eines Mergers, mit einem über den Boden zu führenden Arbeitsaggregat sowie einer Aufhängung zum im Arbeitsbetrieb höhenbeweglichen Aufhängen des Arbeitsaggregats, wobei die Aufhängung einen Anbaubock mit Befestigungsmitteln zum Befestigen an einem Schlepper oder einem damit verbundenen Rahmen sowie eine erste Lenkergruppe besitzt, die vom Anbaubock auskragt und ein Viergelenk bildet, das mit zwei Gelenken am Anbaubock gelagert ist und eine zweite Lenkergruppe trägt, an der das Arbeitsaggregat befestigt ist, sowie mit einer Entlastungseinrichtung zum Gewichtsentlasten des Arbeitsaggregats, die einen längenveränderbaren Kraftgeber in Form eines Federbeins oder Druckmittelzylinders aufweist.

Mähwerke oder Merger werden üblicherweise höhenbeweglich aufgehängt, um im Arbeitsbetrieb eine Bodenanpassung zu erreichen, so dass das Arbeitsaggregat sich in Bodenwellen, in die der Schlepper noch nicht eingefahren ist, absenken kann bzw. Hügeln durch eine Aufwärtsbewegung ausweichen kann, ohne dass der Schlepper selbst bereits auf den Hügel aufgefahren ist. Um solche Höhen-Ausgleichsbewegungen gegenüber dem Schlepper im Arbeitsbetrieb zu gestatten, ist es bekannt, die Arbeitsaggregate landwirtschaftlicher Anbaugeräte mittels einer oder mehreren Lenkeranordnungen an einem Anbaubock beweglich aufzuhängen, der direkt am Schlepper angebaut sein kann, beispielsweise über eine per se bekannte Dreipunktaufhängung mit Ober- und Unterlenkern, was insbesondere bei frontseitig angebauten Frontmähwerken bzw. Frontmergern gemacht wird. Alternativ kann der genannte Anbaubock aber auch an einem Maschinenrahmen befestigt sein, der dann wiederum an den Schlepper angebaut ist, was beispielsweise bei heckseitig angebauten Heckmähwerken bzw. Heckmergern gerne gemacht wird, um die Arbeitsaggregate seitlich rechts und links auskragend vom Schlepper führen zu können.

Auch wenn der Anbaubock selbst - beispielsweise über die genannte Dreipunktaufhängung - gegenüber dem Schlepper höhenbeweglich verstellt werden kann, beispielsweise um das Arbeitsaggregat für den Straßentransport auszuheben, ist die genannte Höhenbeweglichkeit im Arbeitsbetrieb gegenüber dem Anbaubock oder genauer gesagt zwischen Arbeitsaggregat und Anbaubock wirksam, um den Anbaubock im Arbeitsbetrieb in fester Arbeitsbetriebshöhe fahren zu können. Die Lenkeranordnungen bzw. -gruppen, mittels derer das Arbeitsaggregat relativ zum Anbaubock höhenbeweglich zur Bodenanpassung ist, kann dabei beispielsweise erst eine Lenkergruppe aufweisen, die ein Viergelenk bilden kann, welches vom Anbaubock auskragt und mit zwei Gelenken am Anbaubock um liegende, sich quer zur Fahrtrichtung erstreckende Gelenkachsen beweglich befestigt ist und mit zwei weiteren Gelenken einen Aufhängungslenker tragen kann, der selbst einen Teil des Viergelenks bilden und einen weiteren Aufhängungsträger tragen kann. Die Viergelenks-Ausbildung wird üblicherweise bei Betrachtung mit einer Blickachse liegend quer zur Fahrtrichtung ersichtlich, wobei ein Lenkerpaar in Form eines oberen Lenkers und eines unteren Lenkers vom Anbaubock auskragen und durch einen Verbindungslenker miteinander verbunden sein kann. Klarzustellen ist allerdings, dass ein solches Viergelenk auch mehr als vier Gelenke umfassen kann, bspw. wenn Doppellenker Verwendung finden, und die Lenker des Viergelenks nicht nur in Form länglicher Streben, sondern auch in Form von Lenkerrahmen, beispielsweise in Form von Stabwerksträgern oder Blech-Chassisteilen ausgebildet sein können, so dass beispielsweise ein Viergelenkslenker mit zwei Gelenken am Anbaubock befestigt sein kann, die dann beispielsweise eine Gelenkachse bzw. einen Gelenkpunkt mit einer Gelenkachse liegend quer zur Fahrtrichtung bilden. Genauso ist es möglich, dass das zuvor genannte Lenkerpaar in Form eines oberen Lenkers und eines unteren Lenkers unterschiedlich ausgebildet ist. Beispielsweise kann der obere Lenker eine längliche Strebe und der untere Lenker einen Lenkerrahmen bilden, so dass sich räumlich betrachtet eine im Querschnitt dreieckige Lenkerstruktur ergibt.

An der genannten ersten Lenkergruppe, die das vom Anbaubock auskragende Viergelenk bildet, kann das Arbeitsaggregat dann über eine zweite Lenkergruppe aufgehängt sein, die einerseits an der ersten Lenkergruppe befestigt, beispielweise gelenkig angelenkt sein kann und andererseits am Arbeitsaggregat befestigt sein kann. Auch bei dieser zweiten Lenkergruppe können die Lenker in Form länglicher Streben oder auch in Form von Lenkerrahmen ausgebildet sein, wobei auch hier räumliche Lenkeranordnungen mit beispielsweise einem zentralen Oberlenker und zwei seitlich versetzten Unterlenkern vorgesehen sein kann. Gegebenenfalls kann die zweite Lenkergruppe auch nur einen Lenker umfassen, der an einem der Lenker des vom Anbaubock auskragenden Viergelenks starr befestigt sein kann.

Ungeachtet der konkreten Ausbildung der Lenkergruppen wird üblicherweise eine Entlastungseinrichtung zur Gewichtsentlastung des Arbeitsaggregats vorgesehen, damit das Arbeitsaggregat nicht mit seinem vollen Gewicht auf dem Boden aufstehen muss und insbesondere nicht mit der mit dem Gewicht einhergehenden vollen Trägheit auf einen Bodenhügel auffährt. Die Gewichtsentlastungseinrichtung reduziert den Bodenaufstandsdruck des Arbeitsaggregats, um ein leichtfüßiges Hinwegführen des Arbeitsaggregats über kupiertes Gelände mit Bodenwellen und -senken zu gestatten. Solche Entlastungseinrichtungen können Kraftgeber wie Federbeine oder Druckmittelzylinder aufweisen, die sich längen und verkürzen können, um Höhenbewegungen des Arbeitsaggregats zu ermöglichen und dabei gleichzeitig eine Entlastungskraft bereitstellen, die zumindest einen Teil der Gewichtskraft des Arbeitsaggregats kompensiert.

Solche Federbeine können mechanische Federn beispielsweise in Form von Schraubfedern umfassen oder auch pneumatisch bzw. hydraulisch in Form von Druckmittelzylindern ausgebildet sein, wobei die Druckmittelzylinder aus Druckspeichern mit Druckmittel beschickt werden können, um eine Verkürzung und eine Längung des Zylinders unter gleichzeitiger Bereitstellung der Entlastungskraft zu ermöglichen. Dabei sind auch Mischformen aus Druckmittelzylindern und mechanischen Federn möglich.

Durch die Reduzierung der Bodenauflagekraft im Arbeitsbetrieb wird aber nicht nur die Bodenanpassung verbessert und leichtfüßige Auf- und Abbewegungen über Bodenwellen bzw. -senken hinweg ermöglicht, sondern das Arbeitsaggregat wird auch leichtzügiger, d.h. der Fahrwiderstand wird geringer, wodurch sich die Traktion des Schleppers verbessert und der Leistungsbedarf verringert wird. Gleichzeitig kann der Verschleiß an den Bauteilen durch Bodenkontakt verringert und die Lebensdauer der Bauteile erhöht werden. Durch weniger Schmutzaufbau an den Gleitkufen kann beispielsweise bei Mähwerken die Schnittqualität verbessert und bei Mergern die Verschmutzung des Ernteguts verringert werden und es werden auch die Bauteile nicht so stark belastet. Bodenseitig ergibt sich der Vorteil, dass die Grasnarbe nicht so stark beschädigt wird.

Ungeachtet der konkreten Ausbildung der Entlastungseinrichtung ist es bisher jedoch so, dass die Bodenaufstandskraft zwischen höchster Aggregatsstellung und tiefster Aggregatsstellung relativ stark variiert, wobei es generell bei den bislang am Markt verfügbaren Entlastungssystemen oft so ist, dass das Arbeitsaggregat in der tiefsten Position relativ zum Anbaubock, also wenn das Arbeitsaggregat in eine Bodensenke eingefahren und abgesenkt ist, wesentlich leichter am Boden aufliegt, d.h. eine deutlich geringere Bodenaufstandskraft besitzt als in der höchsten Position, wenn das Arbeitsaggregat beispielsweise auf eine stärkere Geländeerhöhung aufgefahren ist. Dies kann dazu führen, dass das Arbeitsaggregat nicht vollständig in die Bodensenke einfährt und bspw. am Boden der Mulde die Schnitthöhe ein Stück größer wird bzw. die Pickup eines Mergers das Erntegut dort nicht vollständig aufnimmt. Am Kamm von Geländekuppen bzw. Hügeln können durch die dort niedrigere Entlastung umgekehrte Effekte auftreten.

Eine solche herkömmliche Aufhängung des Arbeitsaggregats mit Entlastungseinrichtung zeigt beispielsweise die Schrift EP 1 593 294 B1, die mehrere Lenkergruppen besitzt, die einerseits vom Anbaubock auskragen und andererseits gegenläufig angeordnet sind, so dass sich insgesamt scherenartige Lenkerbewegungen ergeben und damit einhergehend eine günstige Bodenanpassung erzielt werden kann. Als Entlastungseinrichtung ist eine Zugfeder zwischen Anbaubock und Arbeitsaggregat vorgesehen, die die Entlastungskraft direkt auf das Arbeitsaggregat gibt.

Weitere im Arbeitsbetrieb höhenbewegliche Aufhängungen für Arbeitsaggregate von landwirtschaftlichen Anbaugeräten sind beispielsweise aus den Schriften DE 40 07 735 A1, DE 19 624 396 A1 und US 5,193,330 A bekannt.

Der vorliegenden Erfindung liegt angesichts der geschilderten Situation die Aufgabe zugrunde, ein verbessertes landwirtschaftliches Anbaugerät der genannten Art zu schaffen, das Nachteile des Stands der Technik vermeidet und letzteren in vorteilhafter Weise weiterbildet. Insbesondere soll eine verbesserte Höhenbeweglichkeit des Arbeitsaggregats im Arbeitsbetrieb erzielt werden, die eine leichtfüßige Bodenanpassung bei kupiertem Gelände mit Bodenwellen und -senken gestattet, ohne den für ein effizientes Arbeitsergebnis notwendigen Bodenkontakt durch das Arbeitsaggregat zu verlieren, insbesondere auch dann, wenn mit höheren Fahrgeschwindigkeiten in stärker kupiertem Gelände gefahren wird.

Erfindungsgemäß wird die genannte Aufgabe durch ein landwirtschaftliches Anbaugerät gemäß Anspruch 1 gelöst. Bevorzugte Ausgestaltungen der Erfindung sind Gegenstand der abhängigen Ansprüche.

Es wird also vorgeschlagen, den Kraftgeber der Entlastungseinrichtung am Viergelenk zu verbauen und das Viergelenk zusammen mit dem Kraftgeber so auszubilden bzw. anzuordnen, dass mit einer Verkürzung und/oder Längung des Kraftgebers einhergehende Veränderung der vom Kraftgeber bereitgestellten Kraft zumindest teilweise durch einen veränderten Hebelarm des Kraftgebers kompensiert wird. Erfindungsgemäß ist der Kraftgeber der Entlastungseinrichtung auf Druck belastet am Viergelenk verbaut derart, dass der Kraftgeber bei sich absenkendem Viergelenk eine Verkürzung erfährt und sich der Hebelarm des Kraftgebers bei sich absenkendem Viergelenk verkleinert.

Dieser Viergelenks- und Kraftgeberanordnung liegt die Überlegung zugrunde, dass bei Druckmittelzylindern, die aus Druckspeichern beaufschlagt werden, die Druckspeicher nur begrenztes Volumen haben und es insofern oft so ist, dass die Stellkraft in zusammengefahrenem Zustand des Druckmittelzylinders, d.h. wenn dieser als Druckkraftgeber agiert, zunimmt und weniger wird, wenn sich der Zylinder längt, wobei die Stärke der sich verändernden Stellkraft einer linearen Zunahme oder auch einer exponentiellen Zunahme zur zusammengedrückten Stellung hin bzw. einer Mischform einer solchen linearen und exponentiellen Zunahme unterliegen kann, wobei sich auch bei mechanischen Federbeinen ähnliche Charakteristiken ergeben können und insbesondere zur vollends zusammengedrückten Stellung hin eine Krafterhöhung eintreten kann. Durch einen sich bei Verkürzung des Kraftgebers gleichzeitig verkleinernden Hebelarm, insbesondere zur verkürzten Endstellung hin, die der tiefsten Position des Arbeitsaggregats entspricht, können die beiden Effekte, d.h. eine Zunahme der Entlastungskraft und eine Verkleinerung des Hebelarms, sich gegenläufig in gewissem Maße kompensieren.

Gemäß einem Aspekt der Erfindung kann die Anordnung und Ausbildung von Kraftgeber und Viergelenk derart aufeinander abgestimmt sein, dass sich eine über den Höhenverstellbereich der Aufhängung hinweg zumindest näherungsweise gleichbleibende Bodenaufstandskraft des Arbeitsaggregats ergibt. Dabei werden der Verlauf der Stellkraft des Kraftgebers über dessen Längung/Verkürzung bzw. über dessen Stellweg so an die Geometrie des von der ersten Lenkergruppe gebildeten Viergelenks angepasst, dass der Hebelarm sich sozusagen spiegelbildlich zum Verlauf der Stellkraft über die Längung/Verkürzung des Kraftgebers verändert und eine gegenseitige Kompensation zumindest näherungsweise vollständig erfolgt.

Insbesondere kann die Geometrie des Viergelenks und der Anordnung des Kraftgebers und die Stellkraftcharakteristik des Kraftgebers derart aufeinander abgestimmt sein, dass der Hebelarm, den der Kraftheber bezüglich des Viergelenks hat, entsprechend abnimmt, wenn die Stellkraft des Kraftgebers zunimmt und umgekehrt entsprechend zunimmt, wenn die Stellkraft des Kraftgebers abnimmt. Beispielsweise kann eine zumindest näherungsweise umgekehrte Proportionalität zwischen dem Verlauf des Hebelarms und dem Verlauf der Stellkraft über Höhenbewegungen des Viergelenks vorgesehen sein, genauer gesagt über einem Schwenkweg des Viergelenks-Lenkers, an dem der Kraftgeber angreift, und andererseits über dem Stellweg des Kraftgebers im Sinne einer Längung und Verkürzung des Kraftgebers.

Die Veränderung des Hebelarms des Kraftgebers kann im Wesentlichen durch die Wahl der Anlenkpunkte des Kraftgebers relativ zu den Gelenkpunkten des Viergelenks beeinflusst bzw. gewählt werden, wobei mit der Wahl der Anlenkpunkte des Kraftgebers relativ zu den Viergelenks-Gelenkpunkten auch eine entsprechende Wahl der Kraftgeberlänge und der Lenkerlängen einhergeht.

Die Charakteristik des Stellkraftverlaufs über dem Stellweg des Kraftgebers kann in verschiedener Weise eingestellt werden, beispielsweise durch mehrere und/oder verschieden ausgebildete Druckspeicher, wenn der Kraftgeber einen Druckmittelzylinder umfasst oder mehrere und/oder verschiedene mechanische Federn, wenn der Kraftgeber ein Federbein umfasst, wobei auch Druckspeicher und mechanische Federn kombiniert werden können, um eine gewünschte Stellkraft-Charakteristik zu erzielen.

Beispielsweise können unterschiedlich "harte" Druckspeicher parallel geschaltet oder hintereinander geschaltet den Druckmittelzylinder beaufschlagen, sodass in einem Stellwegbereich, in welchem nur ein kleinerer Teil des Druckmittels aus dem Druckmittelzylinder verdrängt ist, der Druckmittelzylinder nur gegen den weicheren Druckspeicher arbeiten muss, um weiteres Druckfluid zu verdrängen. Erreicht der weichere Druckspeicher seinen Anschlag bzw. seine Kapazitätsgrenze, kann weiteres Druckmittel aus dem Druckmittelzylinder in den härteren Druckspeicher verdrängt werden, wodurch sich eine entsprechende, abschnittsweise verschiedene Stellkraft-Charakteristik, das heißt Stellkraft über Stellweg, ergibt. In ähnlicher Weise kann ein Federbein verschiedene mechanische Federn beispielsweise hintereinander geschaltet oder auch parallel geschaltet aufweisen, wobei in verschiedenen Stellwegsbereichen verschiedene Federn aktiv sind, beispielsweise über Anschläge, die den Federweg begrenzen oder Mitnehmer, die eine Feder erst bei Erreichen eines vorbestimmten Stellwegs und dann weiterer Stellbewegung mitnehmen.

In ähnlicher Weise kann auch kombinatorisch ein Druckmittelzylinder mit einer mechanischen Feder gekoppelt werden derart, dass beispielsweise zum Ende des Stellwegs des Druckmittelzylinders hin zusätzlich eine mechanische Feder am Kolben bzw. zwischen Kolben und Zylinder angreift, um eine zusätzliche Stellkraft bereitzustellen.

Um einen günstigen Kraftfluss bei gleichzeitig kompakter Bauweise zu erreichen, kann der Kraftgeber in vorteilhafter Weiterbildung der Erfindung einerseits direkt am Anbaubock abgestützt sein und andererseits im Bereich eines Gelenks am auskragenden Endabschnitt des von der ersten Lenkergruppe gebildeten Viergelenks abgestützt sein. Insbesondere kann der Kraftgeber dabei direkt am Gelenkpunkt des Viergelenks an dessen auskragendem Ende abgestützt sein, um die ViergelenksLenker nicht auf Biegung zu beanspruchen. Gleichwohl wäre es möglich, den Kraftgeber nicht an einem Viergelenks-Gelenkpunkt, sondern an einem der Lenker abzustützen. Durch die Anlenkung des Kraftgebers am äußeren Endabschnitt des Viergelenks erfährt der Kraftgeber eine relativ starke Veränderung seiner Wirkrichtung, wenn sich die erste Lenkergruppe für Höhenbewegungen des Arbeitsaggregats relativ zum Anbaubock bewegt.

In Weiterbildung der Erfindung können der Kraftgeber und einer der Lenker der ersten Lenkergruppe zusammen einen Zweischlag bilden, der am Anbaubock angelenkt ist. Dieser Zweischlag wäre an sich starr, wenn sich der Kraftgeber nicht längen bzw. verkürzen könnte. Da der Kraftgeber aber längenveränderbar ist, kann der Zweischlag und damit der genannte Lenker des Viergelenks verschwenken und dabei eine Längung bzw. Verkürzung des Kraftgebers erzwingen.

Vorteilhafterweise kann die Anordnung dieses Zweischlags so getroffen sein, dass der Kraftgeber und der genannte Lenker in jeder Höhenstellung der Aufhängung zueinander unter einem spitzen Winkel von weniger als 45° geneigt sind, wobei der spitze Winkel zwischen Kraftgeber und Lenker des Zweischlags auch weniger als 30° über den gesamten Höhenverstellweg der Aufhängung betragen kann. Ein solchermaßen recht spitzer Winkel wird der oft nur kleineren Veränderung des Kraftverlaufs des Kraftgebers über dessen Längung bzw. Verkürzung gerecht und stellt eine entsprechend kleinere Veränderung des Hebelarms bereit, die die Stellkraftveränderung zumindest näherungsweise kompensieren kann.

Insbesondere kann der Kraftgeber zwischen einem oberen Lenker und einem unteren Lenker der ersten Lenkergruppe verbaut sein, wobei die genannten oberen und unteren Lenker vom Anbaubock auskragen und daran gelenkig befestigt sein können. Der Kraftgeber kann dabei einen Anlenkpunkt am Anbaubock besitzen, der zwischen den von den Gelenken gebildeten Anlenkpunkten der beiden genannten oberen und unteren Lenker am Anbaubock liegen kann. Ist die genannte erste Lenkergruppe mit Doppellenkern ausgebildet oder mit einem Lenkerrahmen versehen, sodass seitliche, rechts und links versetzt angeordnete Lenkerteile vorgesehen und gelenkig am Anlenkbock gelagert sind, kann der Kraftgeber mittig zwischen diesen seitlichen Lenkerteilen positioniert sein, sodass der Anlenkpunkt des Kraftgebers am Anbaubock nicht vertikal zwischen den Anlenkpunkten der genannten unteren und oberen Lenker liegt, jedoch höhenmäßig nichtsdestotrotz dazwischen angeordnet ist, was zu sehen ist, wenn die Aufhängung in einer Blickrichtung liegend quer zur Fahrtrichtung betrachtet wird.

Vorteilhafterweise kann der Kraftgeber eine Kraftgeberlänge besitzen, die kleiner ist als jede der beiden Lenkerlängen der vom Anbaubock auskragenden Lenker der ersten Lenkergruppe. Hierdurch kann eine insgesamt kompakte Bauweise erzielt werden, wobei gleichzeitig eine ausreichende Veränderung der Wirkrichtung des Kraftgebers und damit der Größe des Hebelarms erreicht werden kann, um allfällige Anstiege der Stellkraft zu einem Stellwegsende hin kompensieren zu können.

**In** Weiterbildung der Erfindung kann die genannte erste Lenkergruppe zumindest näherungsweise eine Parallelogramm-Lenkeranordnung bilden, wobei die auskragende Länge der Lenkergruppe vom Anbaubock weg deutlich größer sein kann als der Abstand der Gelenkpunkte der ersten Lenkergruppe am Anbaubock. Beispielsweise können die zuvor genannten unteren und oberen Lenker eine Lenkerlänge besitzen, die zwei- bis dreimal dem Abstand der Anlenkpunkte der oberen und unteren Lenker am Anbaubock entsprechen kann.

Die Kraftgeberlänge kann beispielsweise im Bereich von 50% bis 90% oder 60% bis 75% der Lenkerlänge des kürzeren der beiden genannten oberen und unteren Lenker entsprechen.

Die zweite Lenkergruppe, die am auskragenden Ende der ersten Lenkergruppe angelenkt ist und das Arbeitsaggregat trägt, kann sich in vorteilhafter Weiterbildung der Erfindung vom auskragenden Ende der ersten Lenkergruppe sozusagen zurück zum Anbaubock hin erstrecken, wobei die zweite Lenkergruppe dabei vom auskragenden Endabschnitt der ersten Lenkergruppe abwärts zum Arbeitsaggregat verlaufen kann. Kragt die erste Lenkergruppe beispielsweise für ein Frontmähwerk oder einen Frontmerger vom Anbaubock in Fahrtrichtung nach vorne aus, kann sich die zweite Lenkergruppe entgegen der Fahrtrichtung rückwärts schräg nach hinten/unten erstrecken. Umgekehrt kann bei einem Auskragen der ersten Lenkergruppe vom Anbaubock entgegen der Fahrtrichtung die zweite Lenkergruppe einen schräg nach vorne unten nehmenden Verlauf besitzen.

Ungeachtet der genannten Gegenläufigkeit der beiden Lenkergruppen kann die zweite Lenkergruppe räumlich beweglich ausgebildet sein und dem Arbeitsaggregat räumliche Wipp- bzw. Drehbewegungen um eine liegende, näherungsweise in Fahrtrichtung weisende Wippachse und/oder um eine aufrechte Achse ermöglichen. Beispielsweise kann die zweite Lenkergruppe dazu konfiguriert sein, dem Arbeitsaggregat Wippbewegungen zu ermöglichen, bei denen rechte und linke Flügelabschnitte des Arbeitsaggregats gegenläufig Auf- und Abbewegungen erfahren. Neigt sich also das Arbeitsaggregat so, dass beispielsweise ein linker Endabschnitt nach oben fährt, kann ein rechter Endabschnitt nach unten fahren.

Alternativ oder zusätzlich kann die zweite Lenkergruppe dem Arbeitsaggregat Drehbewegungen um eine aufrechte Achse ermöglichen derart, dass linke und rechte Flügel bzw. Endabschnitte des Arbeitsaggregats zueinander gegenläufig nach vorne und hinten schwenken können, also beispielsweise dergestalt, dass ein rechter Endabschnitt nach vorne schwenkt, wenn ein linker Endabschnitt nach hinten schwenkt.

Insbesondere kann die zweite Lenkergruppe die genannten Wipp- und Schwenkbewegungen miteinander verknüpfen dergestalt, dass ein aufwärts wippender Flügel bzw. Endabschnitt des Arbeitsaggregats gleichzeitig ein Stück weit nach hinten schwenkt und umgekehrt ein nach unten wippender Endabschnitt gleichzeitig ein Stück weit nach vorne rotiert. Durch eine solchermaßen konfigurierte räumliche Beweglichkeit der zweiten Lenkergruppe kann eine nochmals verbesserte Bodenanpassung erzielt werden. Insbesondere können nur auf einer Maschinenseite auftauchende Geländekopierungen besser abgefangen bzw. durch Bodenanpassbewegungen ausgeglichen werden. Taucht beispielsweise auf einer rechten Maschinenhälfte eine Konturerhebung in der Fahrgasse auf, kann der rechte Endabschnitt des Arbeitsaggregats nach oben und nach hinten schwenken, was vom linken Endabschnitt des Arbeitsaggregats durch eine Schwenkbewegung nach unten und vorne ausgeglichen werden kann. Hierdurch kann das Arbeitsaggregat insgesamt weniger träge und damit schneller reagieren.

In Weiterbildung der Erfindung kann die zweite Lenkergruppe einen zentralen Trägerlenker aufweisen, der etwa mittig am Arbeitsaggregat angelenkt sein kann, insbesondere einen für das Arbeitsaggregat mittigen Aufhängungs-Gelenkpunkt bilden kann. Beispielsweise kann der Gelenkpunkt zwischen diesem zentralen Trägerlenker und dem Arbeitsaggregat kugelgelenksartig mehrachsig verschwenken, sodass das Arbeitsaggregat austariert an besagtem zentralen Trägerlenker aufgehängt ist. Besitzt das Arbeitsaggregat eine exzentrische bzw. asymmetrische Schwerpunktslage, beispielsweise in Folge außermittig vorgesehener Anbauteile wie Getriebe oder Seitenschilde, kann der genannte Anlenkpunkt des zentralen Trägerlenkers auch entsprechend exzentrisch verschoben sein, um im Wesentlichen über dem Schwerpunkt des Arbeitsaggregats zu liegen. Der Anlenkpunkt des zentralen Trägerlenkers kann natürlich auch bei mittiger bzw. nicht-exzentrischer Schwerpunktslage im Wesentlichen über dem Schwerpunkt des Arbeitsaggregats positioniert sein.

Die zweite Lenkergruppe kann ferner zwei seitliche Steuerlenker umfassen, die voneinander beabstandet rechts und links außermittig am Arbeitsaggregat gelenkig befestigt sein können, wobei die genannten seitlichen Steuerlenker ebenfalls mehrachsig gelenkig am Arbeitsaggregat angelenkt sein können.

Die seitlichen Steuerlenker können andererseits an der ersten Lenkergruppe oder einem damit verbundenen Konsolenteil gelenkig befestigt sein, wobei der Abstand der arbeitsaggregatseitigen Anlenkpunkte der Steuerlenker und der Abstand der viergelenksseitigen Anlenkpunkte der Steuerlenker im Wesentlichen gleich sein können, sodass sich die genannten Steuerlenker in einer unausgelenkten Neutralstellung des Arbeitsaggregats im Wesentlichen parallel zueinander in aufrechten, fahrtrichtungsparallelen Ebenen erstrecken können.

Der zentrale Trägerlenker kann im Wesentlichen mittig zwischen den beiden seitlichen Steuerlenkern positioniert sein bzw. sich in einer unausgelenkten Neutralstellung des Arbeitsaggregats in einer aufrechten, fahrtrichtungsparallelen Ebene erstrecken, die zwischen den beiden genannten Ebenen liegt, in welchen sich die seitlichen Steuerlenker erstrecken.

Die Anlenkpunkte der Lenker der zweiten Lenkergruppe auf der Viergelenksseite und auf der Arbeitsaggregatseite können dabei vorteilhafterweise in unterschiedlichen Höhen liegen und/oder in Fahrtrichtung beabstandet sein, sodass die Lenker zwar in der genannten Weise räumlich beweglich sind, andererseits aber das Arbeitsaggregat in einer vorbestimmten Höhe halten, die durch die Stellung des von der ersten Lenkergruppe gebildeten Viergelenks bestimmt wird.

Beispielsweise können die Lenker der zweiten Lenkergruppe eine Dreipunktanlenkung umfassend einen Oberlenker und zwei seitliche Unterlenker oder einen Unterlenker und zwei seitliche Oberlenker bilden.

Die Erfindung wird nachfolgend anhand vorteilhafter Ausführungsbeispiele und zugehörigen Zeichnungen näher erläutert. In den Zeichnungen zeigen:
- Fig. 1:: eine Seitenansicht eines landwirtschaftlichen Anbaugeräts gemäß einer vorteilhaften Ausführung der Erfindung, welches an einen Schlepper frontseitig angebaut und als Mähwerk ausgebildet ist,
- Fig. 2:: eine Draufsicht des Anbaugeräts aus Fig. 1,
- Fig. 3:: eine Seitenansicht des Anbaugeräts in einer mittleren Höhenstellung der Aufhängung,
- Fig. 4:: eine Draufsicht auf das Anbaugerät aus Fig. 3,
- Fig. 5:: eine Seitenansicht des Anbaugeräts in einer abgesenkten Höhenstellung der Aufhängung beispielsweise beim Durchfahren einer Bodensenke,
- Fig. 6:: eine Seitenansicht des Anbaugeräts aus den vorhergehenden Figuren in einer angehobenen Höhenstellung der Aufhängung beispielsweise beim Überfahren einer Geländeerhöhung,
- Fig. 7:: eine Seitenansicht des Arbeitsgeräts aus den vorhergehenden Figuren in einer mittleren Höhenstellung der Aufhängung,
- Fig. 8:: eine Seitenansicht eines Anbaugeräts nach einer weiteren Ausführung der Erfindung, bei der der Kraftgeber der Entlastungseinrichtung nicht mehr direkt am Anbaubock, sondern an einem der Lenker der ersten Lenkergruppe abgestützt ist,
- Fig. 9:: eine Seitenansicht einer weiteren Ausführungsform der Erfindung, bei der der Kraftgeber nicht mehr direkt an einem Gelenkpunkt des von der ersten Lenkergruppe gebildeten Viergelenks an dessen auskragendem Endabschnitt, sondern an einem oberen Lenker des Viergelenks angelenkt ist,
- Fig. 10:: eine Draufsicht auf das Anbaugerät ähnlich Fig. 4, wobei das Arbeitsaggregat und damit einhergehend die zweite Lenkergruppe in einer räumlich verschwenkten Position in Draufsicht gezeigt sind,
- Fig. 11:: eine perspektivische Ansicht des Arbeitsgeräts in der aus Fig. 10 ersichtlichen, räumlich verschwenkten Stellung des Arbeitsaggregats,
- Fig. 12:: eine Frontansicht des Arbeitsaggregats mit räumlich verschwenktem Arbeitsaggregat und räumlich verschwenkter zweiter Lenkergruppe,
- Fig. 13:: eine grafische Darstellung der Bodenaufstandskraft des Arbeitsaggregats des Anbaugeräts aus den vorhergehenden Figuren über den verschiedenen Höhenstellungen der Aufhängung, wobei mit durchgezogenem Strich ein Frontmähwerk mit Aufbereiter und mit strichlierter Linie ein Frontmähwerk ohne Aufbereiter dargestellt sind,
- Fig. 14:: eine grafische Darstellung der Bodenaufstandskraft über den verschiedenen Höhenstellungen der Aufhängung, wobei mit durchgezogenem Strich ein Ausführungsbeispiel der Erfindung dargestellt ist und mit strichlierter Linie die Bodenaufstandskraft eines herkömmlichen Anbaugeräts gemäß Stand der Technik dargestellt ist,
- Fig. 15:: eine grafische Darstellung der Bodenaufstandskraft über verschiedenen Höhenstellungen der Aufhängung, wobei mit durchgezogenem Strich erneut ein Ausführungsbeispiel der Erfindung dargestellt ist und mit strichlierter Linie zum Vergleich ein weiteres herkömmliches Anbaugerät nach dem Stand der Technik dargestellt ist,
- Fig. 16:: eine perspektivische Ansicht eines Anbaugeräts nach einer weiteren Ausführungsform der Erfindung, die als Kraftgeber zwei mechanische Federbeine umfasst,
- Fig. 17:: eine Draufsicht auf das Anbaugerät aus Fig. 16, und
- Fig. 18:: ein Kraft-Stellweg-Diagramm des Kraftgebers der Entlastungseinrichtung, das die von der Verkürzung/längung des Kraftgebers abhängige Stellkraft des Kraftgebers zeigt.

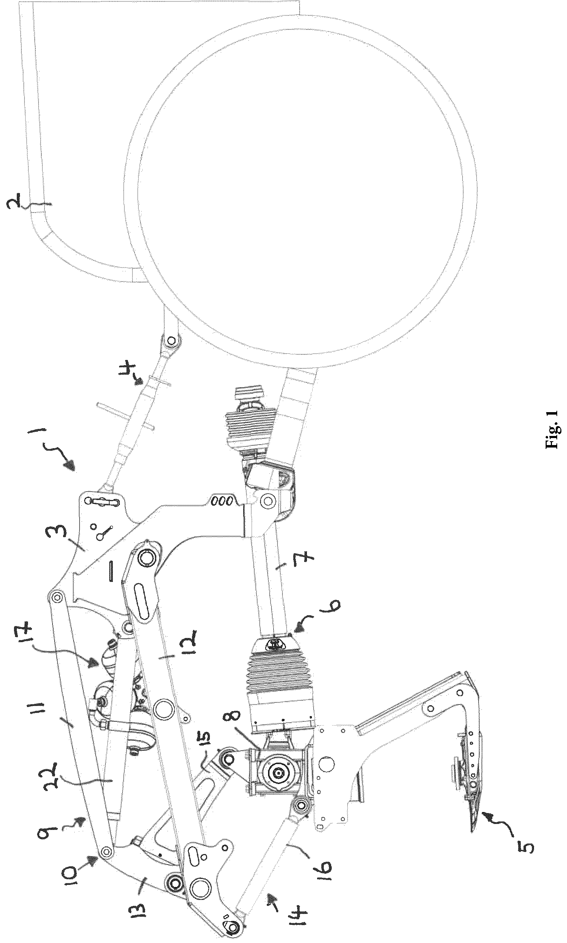

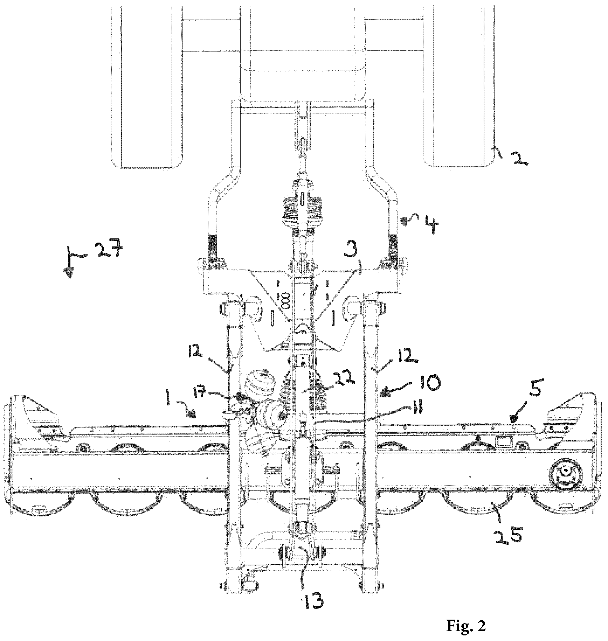

Wie die Figuren 1 und 2 zeigen, kann das landwirtschaftliche Anbaugerät 1 mittels eines Anbaubocks 3 an einem Schlepper 2 angebaut werden, wobei der genannte Anbaubock 3 beispielsweise über eine Dreipunkt-Anlenkung 4 mit einem Oberlenker und zwei Unterlenkern am Schlepper 2 angebaut sein kann, vgl. Fig. 1 und 2.

Die Aufhängung 9 für das Arbeitsaggregat 5 umfasst zwei Lenkergruppen 10 und 14, mittels derer das Arbeitsaggregat 5 an den genannten Anbaubock 3 höhenbeweglich gelagert ist, so dass sich das genannte Arbeitsgerät 5 im Arbeitsbetrieb relativ zum Anbaubock 3 auf und ab bewegen kann, wie noch näher erläutert wird.

Das genannte Arbeitsaggregat 5 kann bei Ausbildung des Anbaugeräts 1 in Form einer Mähmaschine einen Messerbalken 25 umfassen, dessen Messer in an sich bekannter Weise rotatorisch angetrieben werden können, beispielsweise mittels eines Antriebsstrangs 6 vom Schlepper 2 her, der eine Gelenkwelle 7 und am Arbeitsaggregat 5 ein Getriebe 8 umfassen kann, um die Antriebsbewegung in die Messerteller einleiten zu können. Bei Ausbildung des Anbaugeräts 1 als Merger kann das Arbeitsaggregat 5 eine Pickup mit einer rotatorisch umlaufend antreibbaren Stachelwalze umfassen, wobei auch hier ein Antriebsstrang vom Schlepper her angetrieben werden kann.

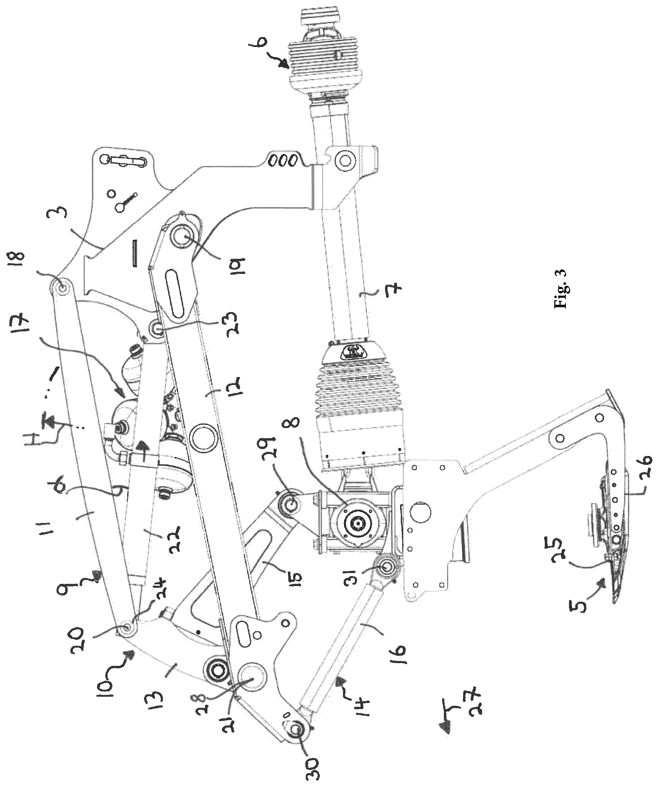

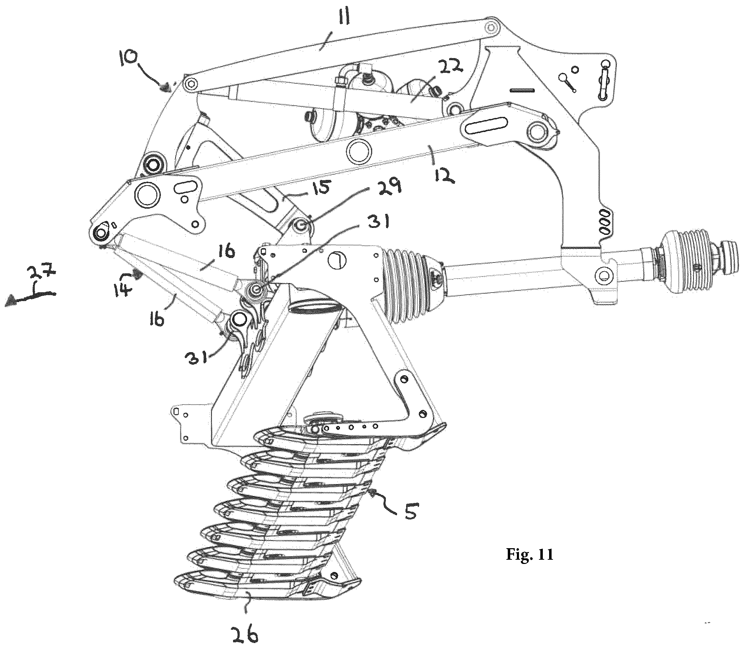

Unabhängig von der konkreten Ausbildung des Arbeitsaggregats 5 kann letzteres mittels Gleitkufen 26, Gleittellern und/oder Tasträdern am Boden abgestützt sein, um Bodenkonturen folgen zu können, vgl. Fig. 3 und Fig. 11.

Wie Fig. 3 zeigt, kann die Aufhängung 9 eine erste Lenkergruppe 10 umfassen, die ein vom Anbaubock 3 auskragendes Viergelenk bilden kann, wobei je nach Anbausituation ein Auskragen in Fahrtrichtung nach vorne oder ein Auskragen entgegen der Fahrtrichtung 27 nach hinten vorgesehen sein kann.

Die genannte erste Lenkergruppe 10 kann dabei einen oberen Lenker 11 und einen unteren Lenker 12 umfassen, die jeweils mittels eines Gelenks 18 bzw. 19 am Anbaubock 3 gelenkig befestigt sein können, wobei die genannten Gelenke 18 und 19 liegende Gelenkachsen quer zur Fahrtrichtung 27 besitzen können.

An ihren vom Anbaubock 3 abgewandten, auskragenden Endabschnitten können die genannten oberen und unteren Lenker 11 und 12 mittels eines Verbindungslenkers 13 miteinander verbunden sein, wobei der Verbindungslenker 13 durch zwei Gelenke 20 und 21 an den genannten Lenkern 11 und 12 gelenkig befestigt sein kann. Die genannten Gelenke 20 und 21 können ebenfalls liegende Gelenkachsen quer zur Fahrtrichtung bilden.

Wie Fig. 3 sowie die Figuren 5-9 zeigen, können die genannten oberen und unteren Lenker 11 und 12 um die Horizontale herum schwenken bzw. einen Schwenkbereich besitzen, der die Horizontale einschließt, wobei die genannten Lenker 11 und 12 mit einer mittleren Höhenstellung beispielsweise leicht spitzwinklig zur Horizontalen nach unten geneigt vom Anbaubock 3 vorspringen können, vgl. Fig. 3.

Die genannten Lenker 11, 12 und 13 können näherungsweise eine längliche Parallelogrammlenker-Anordnung bilden, vorzugsweise allerdings bilden die genannten Lenker 11, 12 und 13 eine von einem Parallelogramm abweichende Lenkeranordnung, insbesondere eine Trapez-Lenkeranordnung, um beim Verschwenken der ersten Lenkergruppe 10 eine Schwenkbewegung des Verbindungslenkers 13 zu erzeugen, welcher beim Auf- und Abwärtsbewegen der ersten Lenkergruppe 10 dem Arbeitsaggregat 5 eine leichte Schwenkbewegung aufprägen kann.

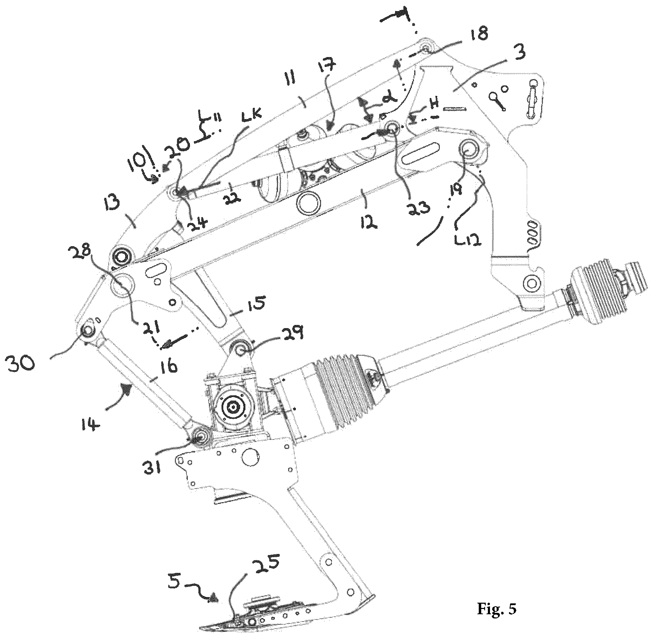

Insbesondere können die oberen und unteren Lenker 11 und 12 unterschiedlich lang ausgebildet sein, wobei vorzugsweise der obere Lenker 11 eine Lenkerlänge L₁₁ besitzen kann, die kürzer ist als die Lenkerlänge L₁₂ des unteren Lenkers 12, vgl. Fig. 5.

Alternativ oder zusätzlich hierzu können die Gelenke 18 und 19 der ersten Lenkergruppe 10 am Anbaubock 3 voneinander einen Abstand besitzen, der näherungsweise dem Abstand der Gelenke 20 und 21 der ersten Lenkergruppe 10 an dessen auskragendem Endabschnitt entspricht, wobei der Abstand des einen Gelenkpaares 18, 19 beispielweise im Bereich von 80%-120% des Abstands des anderen Gelenkpaars 20, 21 betragen kann.

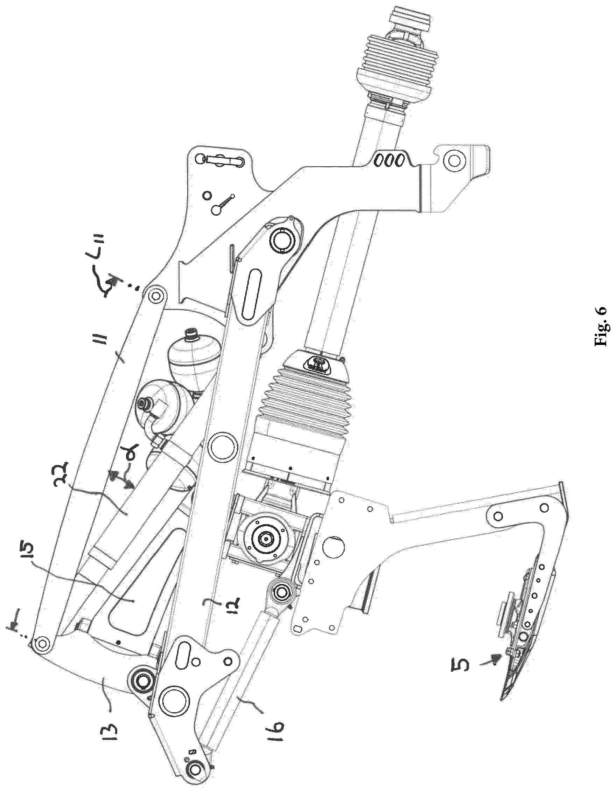

Insbesondere kann die erste Lenkergruppe 10 mit ihren Gelenkpunkten 18-21 eine trapezförmige Lenkeranordnung bilden, um beim Auf- und Abscharnieren der Lenkergruppe 10 relativ zum Anbaubock 3 eine Schwenkbewegung des Verbindungslenkers 13 zu erzeugen, die insbesondere derart orientiert sein kann, dass das Arbeitsaggregat bei einer Aufwärtsbewegung mit einer Vorderkante nach oben und einer Hinterkante nach unten kippt, vgl. Fig. 6 und umgekehrt bei einer Absenkbewegung mit der Vorderkante nach unten und mit der Hinterkante nach oben kippt, vgl. Fig. 5.

Das Arbeitsaggregat 5 wird also vorteilhafterweise nicht einfach in konstant bleibender Ausrichtung auf und ab bewegt, sondern dabei gleichzeitig leicht verkippt, um beim Auffahren auf einen Hügel bzw. eine Geländeerhebung leichter über die Erhebung hinwegzukommen und umgekehrt beim nach unten Einfahren in eine Senke die Vorderkante des Arbeitsaggregats schneller abzusenken, vgl. vergleichend die Figuren 5-7.

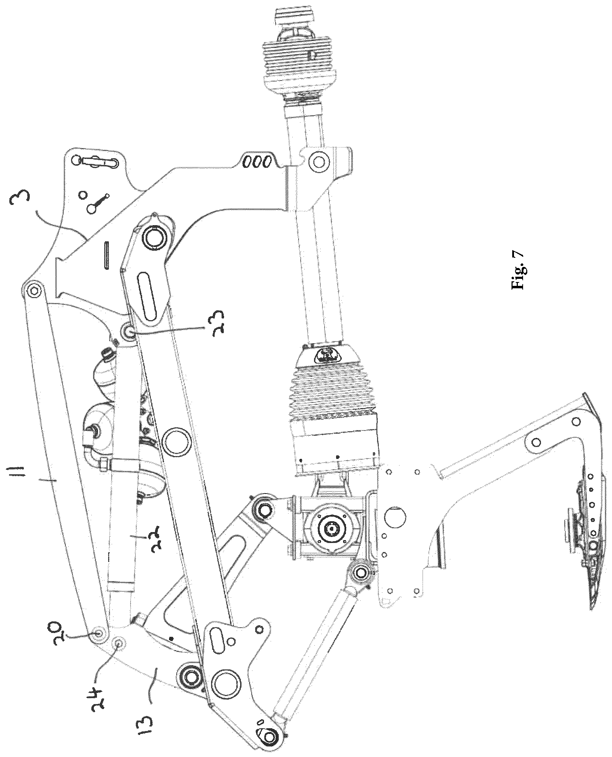

Das Arbeitsaggregat 5 ist dabei an der genannten ersten Lenkergruppe 10 mittels einer zweiten Lenkergruppe 14 aufgehängt, die einen zentralen Trägerlenker 15 und zwei seitlich leicht nach rechts und links versetzte Steuerlenker 16 umfassen kann, die jeweils einerseits am Arbeitsaggregat 5 und andererseits am auskragenden Endabschnitt der ersten Lenkergruppe 10 gelenkig befestigt sein können. Dabei kann der zentrale Trägerlenker 15 mittig am Arbeitsaggregat 5 bzw. oberhalb des Schwerpunkts des Arbeitsaggregats 5 durch ein Gelenk 29 am Arbeitsaggregat 5 angelenkt sein, wobei das genannte Gelenk 29 kugelgelenksartig räumliche Schwenkbewegungen zulassen kann. An der ersten Lenkergruppe 10 kann der genannte zentrale Trägerlenker 15 durch ein Gelenk 28 angelenkt sein, das vorteilhafterweise an dem genannten Verbindungslenker 13 vorgesehen sein oder an dem Gelenk 21 zwischen dem Verbindungslenker 13 und dem unteren Lenker 12 angreifen kann, vgl. Fig. 7, wobei das genannte Gelenk 28 ebenfalls vorteilhafterweise kugelgelenkartig räumliches Verschwenken des zentralen Trägerlenkers 15 relativ zur ersten Lenkergruppe 10 zulassen kann. Wie Fig. 7 verdeutlicht, kann sich der genannte zentrale Trägerlenker 15 zumindest in einer mittleren Neutralstellung der Aufhängung 9 vom auskragenden Endabschnitt der ersten Lenkergruppe 10 schräg nach unten zurück zum Anbaubock 3 erstrecken. Das Gelenk 28 kann höher positioniert sein als das Gelenk 29 am Arbeitsaggregat 5.

Die genannten seitlich versetzten Steuerlenker 16 sind jeweils mit einem Gelenk 31 am Arbeitsaggregat 5 gelenkig befestigt und mittels eines Gelenks 30 am auskragenden Endabschnitt der ersten Lenkergruppe 10 befestigt, vorzugsweise an einem Endabschnitt des unteren Lenkers 12, der beispielsweise über das Gelenk 21 des Verbindungslenkers 13 hinaus auskragen kann, vgl. beispielsweise Fig. 3 sowie 5-7. Die genannten Gelenke 30 und 31 zur Anlenkung der Steuerlenker 16 können ebenfalls kugelgelenksartig räumliche Schwenkbewegungen zulassen.

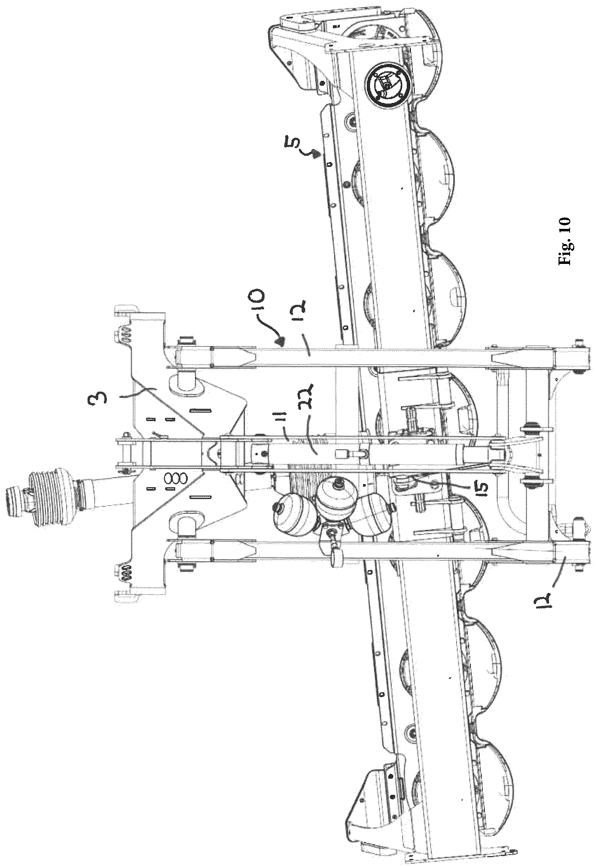

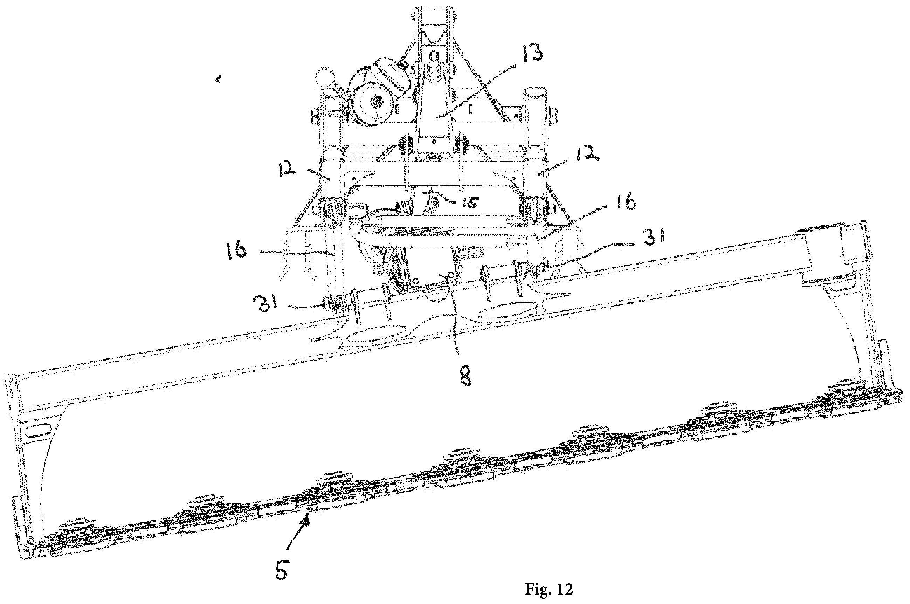

Wie die Figuren 10, 11 und 12 verdeutlichen, können die Steuerlenker 16 zumindest in einer unausgelenkten Neutralstellung zueinander parallel angeordnet sein und sich in fahrtrichtungsparallelen, aufrechten Ebenen erstrecken, vgl. Fig. 12, die allerdings eine verschränkte Stellung der zweiten Lenkerbaugruppe 14 zeigt, sowie Fig. 3, die die beiden Steuerlenker 16 hintereinander verdeckt zeigt. Der zentrale Trägerlenker 15 kann zumindest in der unausgelenkten Neutralstellung der Aufhängung 9 mittig zwischen den beiden Steuerlenkern 16 angeordnet sein und im Vergleich zu den Steuerlenkern 16 höherliegend angeordnet sein, wobei die Gelenke 28, 29 des Trägerlenkers 15 einerseits und die Gelenke 30, 31 der Steuerlenker 16 andererseits bei Betrachtung in einer Blickrichtung liegend quer zur Fahrtrichtung 27 ein Viergelenk bilden und dabei näherungsweise ein Parallelogramm oder ein leichtes Trapez definieren können, vgl. Fig. 3.

Wie Fig. 3 zeigt, kann das Gelenk 28 des zentralen Trägerlenkers 15 an einem Querträger der ersten Lenkergruppe 10 in dessen auskragendem Endbereich montiert bzw, abgestützt sein, wobei das Gelenk 28 eine liegende, quer zur Fahrtrichtung 27 orientierte Gelenkachse haben kann, die koaxial zur Gelenkachse des Gelenks 21 sein kann, das den unteren Lenker 12 der ersten Lenkergruppe 10 mit deren Verbindungslenker 13 verbindet, vgl. Fig. 3 und 5. Ggf. kann das Gelenk 28 auch direkt am Gelenk 21 abgestützt sein bzw. damit zusammengefaßt sein. Alternativ kann der Trägerlenker 15 mit dem Gelenk 28 aber auch an dem Verbindungslenker 13 leicht oberhalb des unteren Gelenks 21 des Verbindungslenkers 13 positioniert sein, so dass der Anlenkpunkt des Trägerlenkers 15 durch das Verschwenken des Verbindungslenkers 13, welches beim Auf- und Abscharnieren der ersten Lenkergruppe 10 gegenüber dem unteren Lenker 12 und damit gegenüber dem Gelenk 30 der Steuerlenker 16 wandert. Dieses Verschieben bzw. Wandern des Gelenks 28 des zentralen Trägerlenkers 15 gegenüber dem Gelenk 30 der Steuerlenker 16 kann bei Auf- und Abbewegungen zu den zuvor beschriebenen Kippbewegungen des Arbeitsaggregats 5 beitragen, wie sie die Figuren 5-7 im Vergleich zueinander verdeutlichen.

Wie Fig. 3 weiterhin zeigt, können die Lenker 15, 16 der zweiten Lenkerbaugruppe 14 deutlich kürzer als die Lenker 11 und 12 der ersten Lenkergruppe 10 ausgebildet sein und beispielsweise eine Länge im Bereich von 30% bis 80% oder 40% bis 60% der Lenkerlängen L₁₁, L₁₂ betragen, vgl. Fig. 3 und 5.

Insbesondere können die oberen und unteren Lenker 11 und 12 der ersten Lenkerbaugruppe 10 über das Arbeitsaggregat 5 hinaus vom Anbaubock 3 aus auskragen. Durch die gegenläufige, leicht nach unten gehende Erstreckung der Lenker 15, 16 der zweiten Lenkergruppe 14 kann das Arbeitsaggregat 5 vom Anbaubock 3 beabstandet unterhalb der ersten Lenkergruppe 2 geführt sein, vgl. Figuren 3 sowie 5-7.

Wie die Figuren 10-12 verdeutlichen, bilden die Lenker 15, 16 der zweiten Lenkergruppe 14 eine Dreipunktanlenkung für das Arbeitsaggregat 5 an der ersten Lenkergruppe 10, wobei die genannte zweite Lenkergruppe 14 räumlich mehrachsig verschwenkbar ausgebildet ist und mehrachsige Schwenkbewegungen des Arbeitsaggregats 5 relativ zur ersten Lenkergruppe 10 und damit auch relativ zum Anbaubock 3 zulässt bzw. steuert. Insbesondere ist die genannte zweite Lenkergruppe 14 derart ausgebildet, dass das Arbeitsaggregat 5 um eine aufrechte Schwenkachse, die im Bereich des zentralen Trägerlenkers 15 angeordnet sein kann, Drehbewegungen ausführen kann, so dass ein rechter Endabschnitt und ein linker Endabschnitt des Arbeitsaggregats 5 gegenläufig zueinander in Fahrtrichtung nach vorne und hinten schwenken können, vgl. Fig. 10.

Andererseits sieht die zweite Lenkergruppe 14 eine Verschwenkbarkeit des Arbeitsaggregats 5 um eine liegende, in Fahrtrichtung weisende Wippachse vor, die sich im Bereich zwischen den Lenkern 15 und 16 der Lenkergruppe 14 erstrecken kann, vgl. Fig. 12.

Insbesondere kann die genannte Lenkergruppe 14 diese beiden Schwenkbewegungen um die liegende, fahrtrichtungsparallele Wippachse und die aufrechte Schwenkachse miteinander koppeln bzw. das Arbeitsaggregat 5 so verschwenken, dass beide Schwenkbewegungsanteile gleichzeitig ausgeführt werden, und zwar insbesondere derart, dass ein nach oben schwenkender Endabschnitt des Arbeitsaggregats 5 gleichzeitig nach hinten schwenkt und ein nach unten schwenkender Endabschnitt gleichzeitig nach vorne schwenkt, vgl. vergleichend die Figuren 10-12.

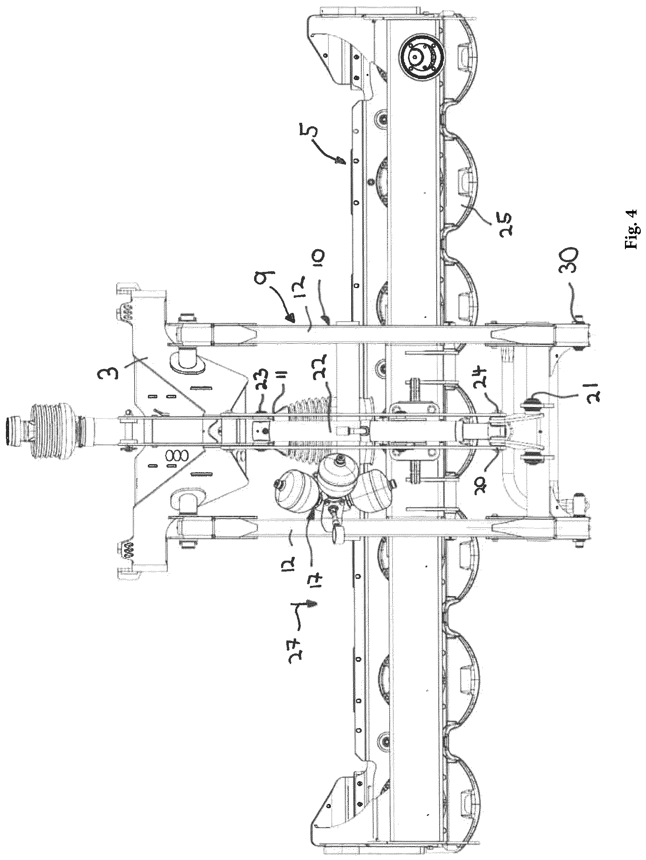

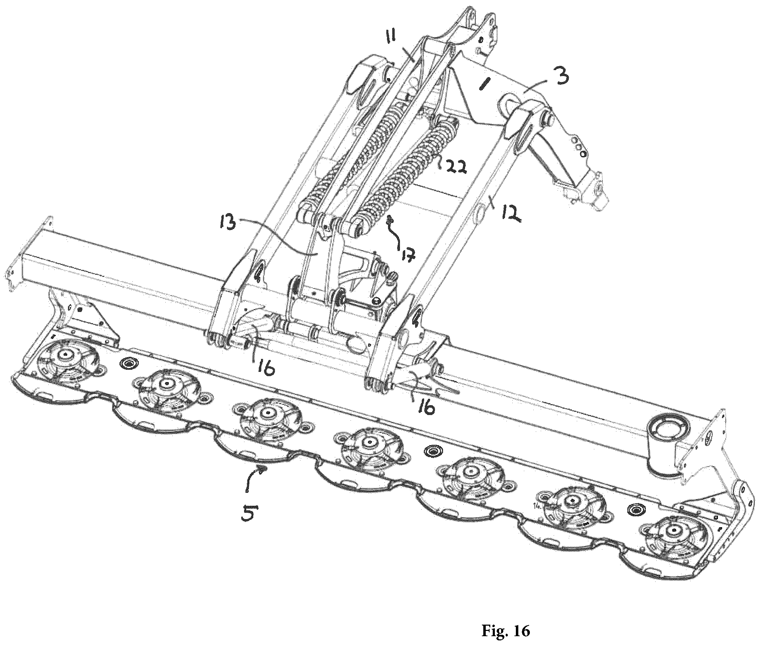

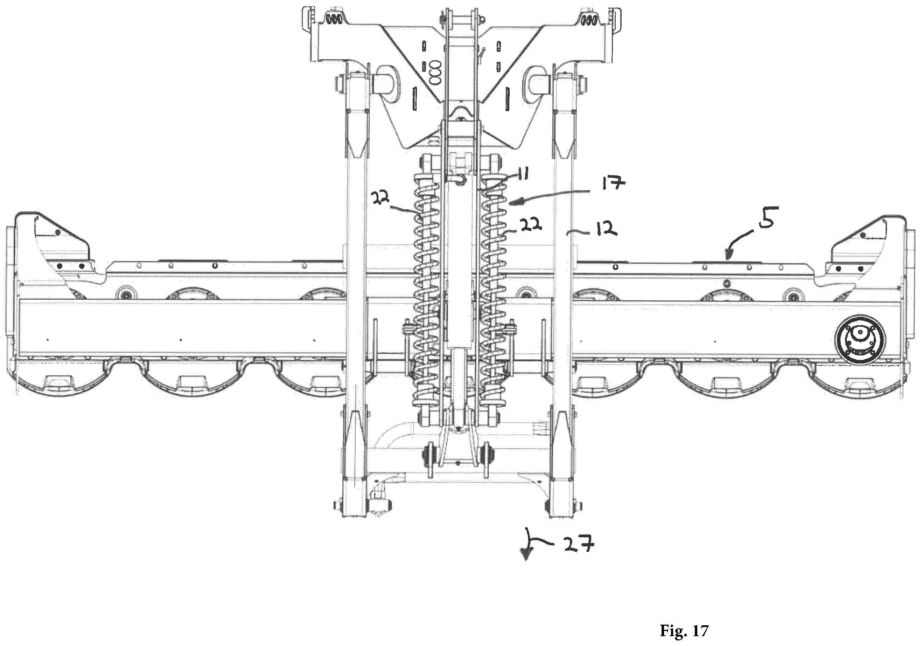

Zur Gewichtsentlastung des Arbeitsaggregats 5 ist eine Entlastungseinrichtung 17 vorgesehen, die einen Kraftgeber 22 umfasst, der einen Druckmittelzylinder umfassen kann, welcher einfach wirkend ausgebildet sein kann, vgl. Figuren 1-12. Alternativ oder zusätzlich kann der Kraftgeber 22 auch ein mechanisches Federbein umfassen, vgl. Figuren 16 und 17.

Unabhängig von der Ausbildung des Kraftgebers 22 als Druckmittelzylinder oder mechanisches Federbein kann der Kraftgeber 22 dabei mehrere Druckmittelzylinder oder Federbein kann der Kraftgeber 22 dabei mehrere Druckmittelzylinder oder Federbeine parallel geschaltet nebeneinander umfassen, vgl. Figuren 16 und 17, wobei aber auch Mischformen aus Druckmittelzylinder und mechanischen Federbeinen möglich sind.

Wie bspw.Fig. 3 zeigt, kann ein als Druckmittelzylinder ausgebildeter Kraftgeber 22 aus mehreren Druckspeichern 32 beaufschlagt werden, die zueinander parallel oder hintereinder geschaltet angeordnet sein können, was das Aufsummieren der einzelnen Druckfluidströme angeht.

Vorteilhafterweise ist der Kraftgeber 22 an der ersten Lenkergruppe 10 verbaut und dabei so eingebaut, dass er auf Druck beansprucht wird bzw. eine Verkürzung erfährt, wenn sich die erste Lenkergruppe 10 gegenüber dem Anbaubock 3 absenkt.

Insbesondere kann der Kraftgeber 22 einerseits direkt am Anbaubock 3 durch ein Gelenk 23 abgestützt und andererseits durch ein Gelenk 24 an einem auskragenden Endabschnitt der Lenkergruppe 10 abgestützt sein, insbesondere an dem oberen Gelenk 20 des Verbindungslenkers 13 mit dem oberen Lenker 11.

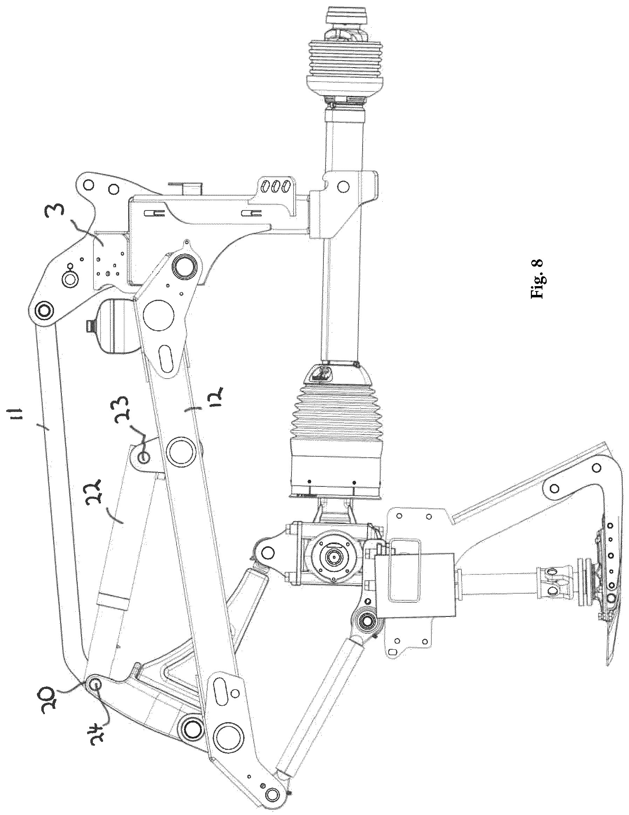

Alternativ kann der Kraftgeber 22 aber auch an einem der Lenker der ersten Lenkergruppe 10 abgestützt sein, insbesondere am unteren Lenker 12, und zwar vorzugsweise in der näher am Anbaubock 3 liegenden Hälfte des genannten unteren Endes 12, vgl. Figur 8.

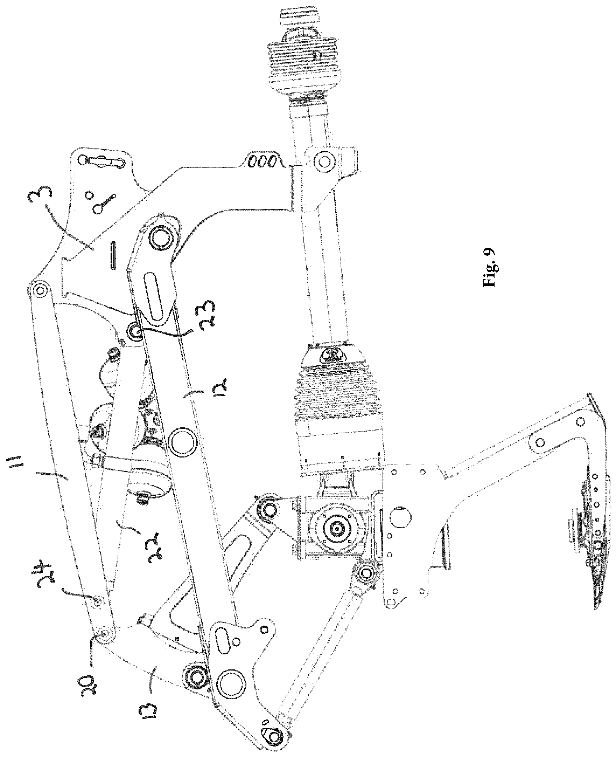

Alternativ oder zusätzlich kann der Kraftgeber 22 mit seinem anderen Anlenkpunkt 24 ebenfalls an einem der Lenker der ersten Lenkergruppe 10 angelenkt sein, insbesondere an dem Verbindungslenker 13, und zwar vorzugsweise immer noch in der Nähe des Gelenks 20 zwischen Verbindungslenker 13 und oberem Lenker 11, vgl. Figur 7. Alternativ kann der Kraftgeber 22 mit seinem Anlenkpunkt 24 auch am oberen Lenker 11 selbst angelenkt sein, vorzugsweise in der Nähe des genannten Gelenks 20 zwischen oberem Lenker 11 und Verbindungslenker 13, vgl. Figur 9.

Vorzugsweise kann sich der Kraftgeber 22 diagonal innerhalb des Viergelenks erstrecken, welches von der ersten Lenkergruppe 10 gebildet wird.

Insbesondere kann der genannte Kraftgeber 22 mit einem der Lenker der ersten Lenkergruppe 10, beispielsweise dem oberen Lenker 11, einen Zweischlag bilden, der gelenkig am Anbaubock 3 angelenkt ist, vgl. beispielsweise Figur 1 und Figur 3.

Gemäß der vorgeschlagenen Einbausituation des Kraftgebers 22 erfährt der Kraftgeber 22 eine Verkürzung, wenn die erste Lenkerbaugruppe 10 sich nach unten bewegt und umgekehrt eine Längung, wenn sich die Lenkergruppe 10 nach oben bewegt.

Vorteilhafterweise ist dabei die Geometrie der Lenkergruppe 10 und der durch die jeweiligen Gelenke gebildeten Anlenkpunkte des Kraftgebers 22 einerseits und der Lenker 11, 12, 13 andererseits derart getroffen, dass sich der Hebelarm H des Kraftgebers 22 bezüglich des von der ersten Lenkergruppe 10 gebildeten Viergelenks verkleinert, wenn sich der Kraftgeber 22 verkürzt bzw. wenn die erste Lenkergruppe 22 sich abwärts bewegt, vgl. vergleichend Figur 3 und Figur 5.

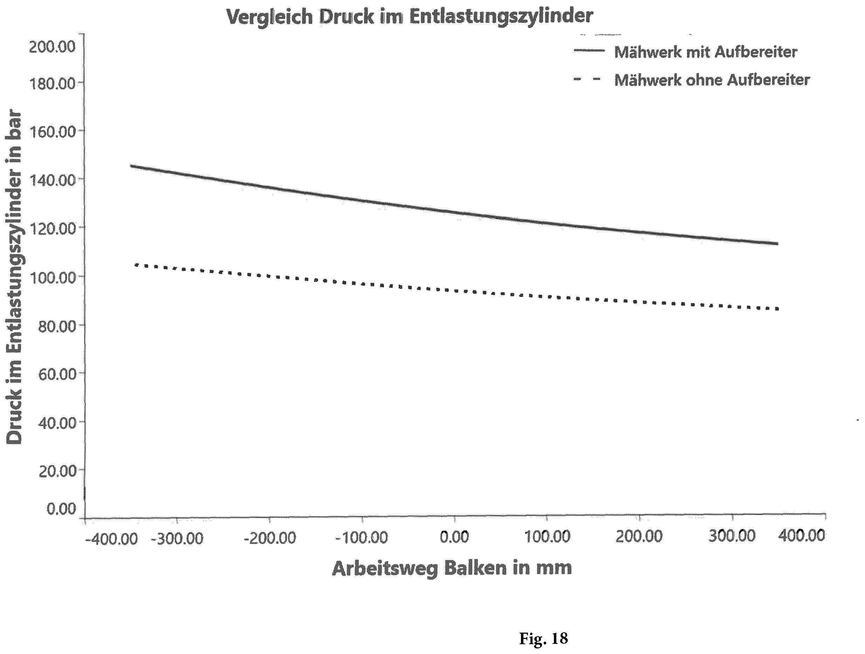

Die von dem Kraftgeber 22 bereitgestellte Kraft zur Gewichtsentlastung kann sich dabei über die Stauchung bzw. den Stellweg des Kraftgebers 22 verändern, insbesondere größer werden, wenn der Kraftgeber 22 verkürzt wird. Beispielsweise kann eine näherungsweise lineare Erhöhung der bereitgestellten Kraft bei zunehmend kürzer werdendem Kraftgeber 22 vorgesehen sein, so wie dies Figur 18 verdeutlicht, ggf. mit einer leicht exponentialen Zunahme zur verkürzten Endstellung des Kraftgebers 22 hin.

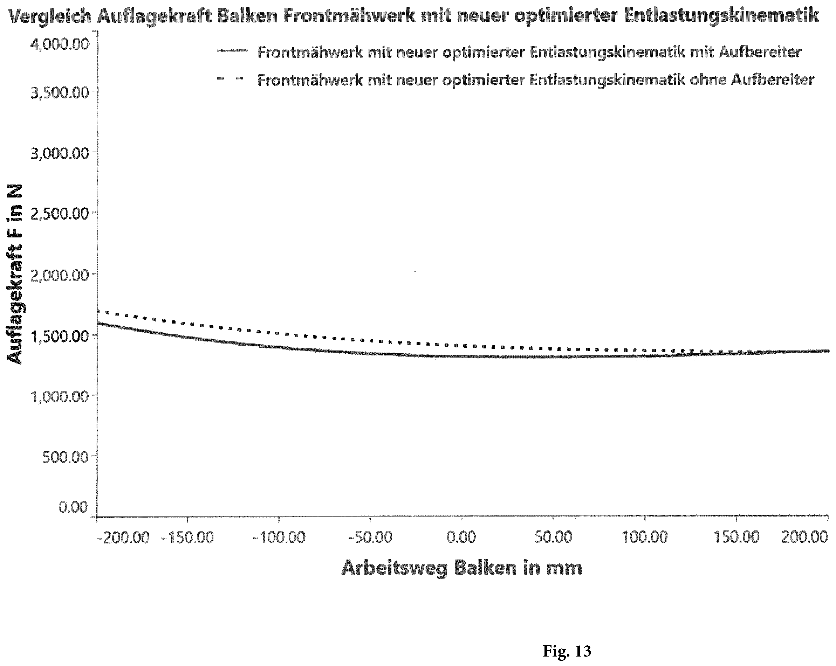

Die genannten beiden Charakteristika, das heißt eine bei Verkürzung des Kraftgebers 22 zunehmende Stellkraft einerseits und ein bei Verkürzung des Kraftgebers 22 durch eine Abwärtsbewegung der Aufhängung 9 entstehende Verkleinerung des Hebelarms, kann eine gewisse Kombination der beiden Effekte erzielt werden und eine zumindest näherungsweise und/oder über einen größeren Bereich des Höhenverstellwegs der Aufhängung 9 gleichbleibende Bodenaufstandskraft des Arbeitsaggregats 5 erzielt werden, so wie dies die Figur 13 verdeutlicht, die strichliert die Auflagekraft eines Arbeitsaggregats 5 in Form eines Mähbalkens und mit durchgezogener Linie die Bodenaufstandskraft eines Arbeitsaggregats 5 in Form eines Mähbalkens mit einem zusätzlichen Aufbereiter zeigt. Nur zur tiefsten Position der Aufhängung 9 hin tritt eine zunehmende leichte Erhöhung der Auflagekraft ein, während über weite Strecken eine zumindest näherungsweise gleichbleibende Auflagekraft erzielt wird.

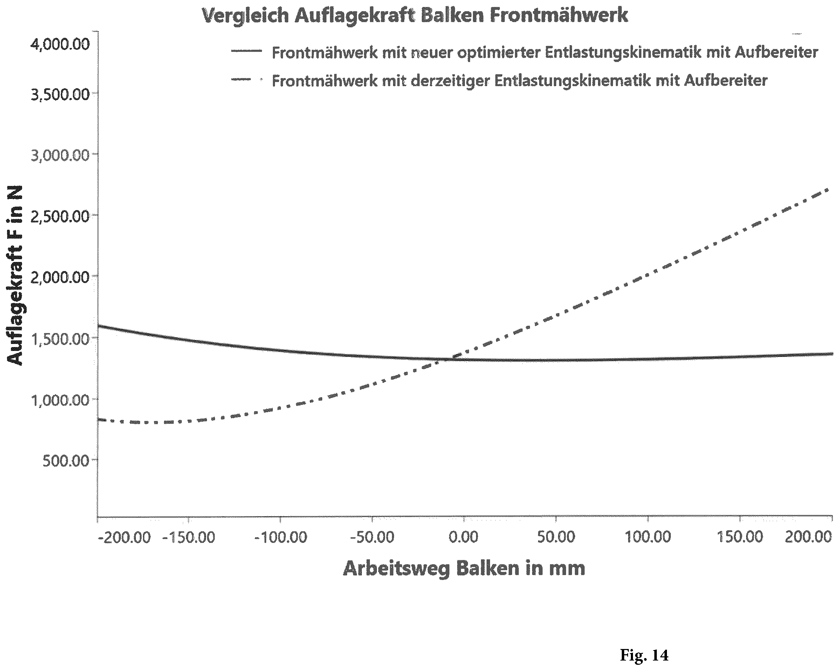

Figur 14 zeigt die - mit durchgezogener Linie dargestellte - näherungsweise gleichbleibende Bodenaufstandskraft im Vergleich zur Bodenaufstandskraft eines Geräts nach dem Stand der Technik, die in Figur 14 strichliert dargestellt ist und den bekannten Effekt zeigt, dass die Bodenaufstandskraft beim nach unten Fahren in eine Bodensenke hinein deutlich abnimmt und umgekehrt beim Auffahren auf einen Hügel deutlich zunimmt.

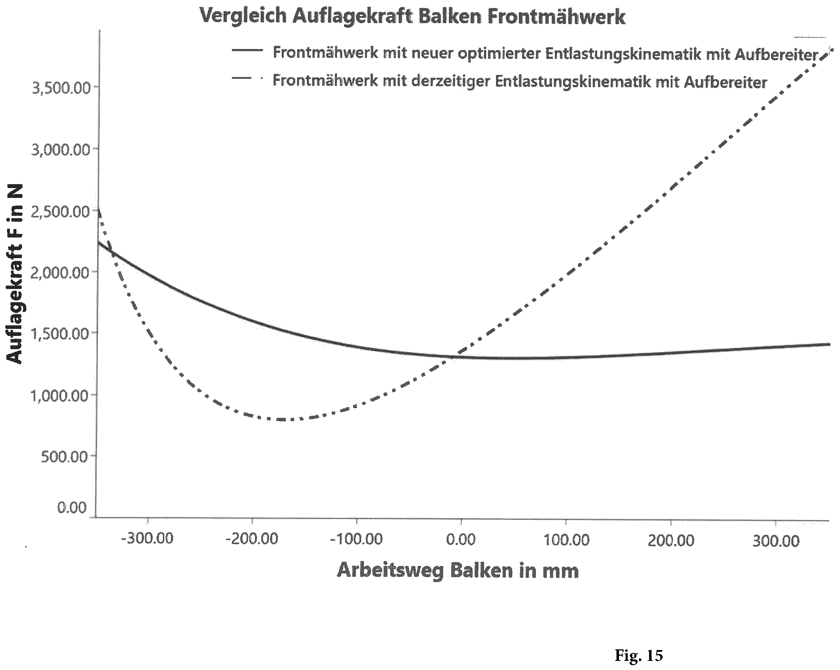

Einen weiteren Vergleich zeigt die Figur 15, und zwar für jeweils ein Arbeitsaggregat in Form eines Mähwerks mit einem ergänzenden Aufbereiter, wobei auch hier die durchgezogene Linie eine zumindest näherungsweise gleichbleibende Bodenaufstandskraft mit leichter Erhöhung zur abgesenkten Stellung hin zeigt. Die strichlierte Linie hingegen zeigt die starke Veränderung der Bodenaufstandskraft für ein Gerät nach dem Stand der Technik, das bei Abwärtsbewegungen zunächst einen relativ stärkeren Abfall der Bodenaufstandskraft und dann wieder einen stärkeren Anstieg zeigt. Zusätzlich steigt die Bodenaufstandskraft bei Aushubbewegungen beispielsweise beim Auffahren auf Hügeln deutlich an, vgl. die strichlierte Linie in Figur 15 an deren rechten Rand.

Wie die Figuren 3 sowie 5 bis 7 zeigen, kann der Kraftgeber 22 mit dem oberen Lenker 11 der ersten Lenkergruppe 10 einen für alle Höhenpositionen der Aufhängung 9 spitzen Winkel α einschließen, der < 45° oder auch < 30° für alle Höhenstellungen sein kann.

## Patentansprüche

1. Landwirtschaftliches Anbaugerät, insbesondere in Form einer Mähmaschine oder eines Mergers, mit einem über den Boden zu führenden Arbeitsaggregat (5) sowie einer Aufhängung (9) zum im Arbeitsbetrieb höhenbeweglichen Aufhängen des Arbeitsaggregats (5), wobei die Aufhängung (9) einen Anbaubock (3) mit Befestigungsmitteln (4) zum Befestigen an einem Schlepper (2) oder einem damit verbundenen Rahmen sowie eine erste Lenkergruppe (10) besitzt, die vom Anbaubock (3) auskragt und ein Viergelenk bildet, das mit zwei Gelenken (18, 19) am Anbaubock (3) schwenkbar gelagert ist und eine zweite Lenkergruppe (14) trägt, an der das Arbeitsaggregat (5) befestigt ist, sowie mit einer Entlastungseinrichtung (17) zum Gewichtsentlasten des Arbeitsaggregats (5), die einen längenveränderbaren Kraftgeber (22) in Form eines Federbeins und/oder eines Druckmittelzylinders aufweist, **dadurch gekennzeichnet, dass** der Kraftgeber (22) auf Druck belastet an der ersten Lenkergruppe (10) verbaut ist derart, dass der Kraftgeber (22) bei sich absenkender erster Lenkerbaugruppe (10) eine Verkürzung erfährt und sich der Hebelarm des Kraftgebers (22) bezüglich des von der ersten Lenkergruppe (10) gebildeten Viergelenks verkleinert.

2. Landwirtschaftliches Anbaugerät nach dem vorhergehenden Anspruch, wobei der Kraftgeber (22) einerseits gelenkig am Anbaubock (3) abgestützt ist und andererseits im Bereich eines Gelenks (20) des von der ersten Lenkergruppe (10) gebildeten Viergelenks an dessen auskragendem Endabschnitt abgestützt ist.

3. Landwirtschaftliches Anbaugerät nach einem der vorhergehenden Ansprüche, wobei der Kraftgeber (22) und einer der Lenker (11) der ersten Lenkergruppe (10) zusammen einen am Anbaubock (3) angelenkten Zweischlag bilden und in allen Höhenstellungen der Aufhängung (9) zueinander unter einem spitzen Winkel α von < 45° oder < 30° geneigt sind.

4. Landwirtschaftliches Anbaugerät nach einem der vorhergehenden Ansprüche, wobei der Kraftgeber (22) zwischen einem oberen Lenker (11) und einem unteren Lenker (12) der ersten Lenkergruppe (10) verbaut ist und einen gelenkigen Anlenkpunkt (23) am Anbaubock (3) besitzt, der zwischen den von den Gelenken (18, 19) gebildeten Anlenkpunkten der beiden genannten oberen und unteren Lenker (11, 12) am Anbaubock (3) liegt.

5. Landwirtschaftliches Anbaugerät nach einem der vorhergehenden Ansprüche, wobei der Kraftgeber (22) eine Kraftgeberlänge (L_{K}) besitzt, die kleiner ist als jede der beiden Lenkerlängen (L₁₁, L₁₂) der vom Anbaubock (3) auskragenden Lenker (11, 12) der ersten Lenkergruppe (10).

6. Landwirtschaftliches Anbaugerät nach einem der vorhergehenden Ansprüche, wobei die erste Lenkergruppe (10) zumindest näherungsweise eine Trapez-Lenkeranordnung bildet.

7. Landwirtschaftliches Anbaugerät nach dem Oberbegriff des Anspruchs 1 oder einem der vorhergehenden Ansprüche, wobei der Kraftgeber (22) und die erste Lenkergruppe (10) derart ausgebildet und angeordnet sind, dass die Entlastungseinrichtung (17) eine über den Höhenverstellbereich der Aufhängung (9) hinweg zumindest näherungsweise gleichbleibende Gewichtsentlastung bereitstellt und/oder die Bodenaufstandskraft des Arbeitsaggregats (5) über den Höhenverstellbereich der Aufhängung (9) hinweg zumindest näherungsweise gleichbleibt.

8. Landwirtschaftliches Anbaugerät nach dem vorhergehenden Anspruch, wobei die Geometrie der ersten Lenkergruppe (10) und der Kraftgeber (22) derart aufeinander abgestimmt sind, dass ein Verlauf der vom Kraftgeber (22) bereitgestellten Kraft über dessen Längung/Verkürzung zumindest näherungsweise spiegelbildlich zu einer Veränderung eines Hebelsarms (H), den der Kraftgeber bezüglich des von der ersten Lenkergruppe (10) gebildeten Viergelenks besitzt, über dem Schwenkweg des Viergelenks, der mit der Längung/Verkürzung des Kraftgebers (22) einhergeht, ist.

9. Landwirtschaftliches Anbaugerät nach einem der vorhergehenden Ansprüche, wobei die zweite Lenkergruppe (14) eine Dreipunkt-Lenkeranordnung bildet, die das Arbeitsaggregat (5) an einem auskragenden Endabschnitt der ersten Lenkergruppe (10) aufhängt.

10. Landwirtschaftliches Anbaugerät nach einem der vorhergehenden Ansprüche, wobei die zweite Lenkergruppe (14) räumlich beweglich ausgebildet ist und räumliche Schwenkbewegungen des Arbeitsagreggats (5) relativ zur ersten Lenkergruppe (10) um eine liegende, in Fahrtrichtung weisende Wippachse und/oder um eine aufrechte Schwenkachse vorsieht.

11. Landwirtschaftliches Anbaugerät nach einem der vorhergehenden Ansprüche, wobei die zweite Lenkergruppe (14) einen zentralen Trägerlenker (15) umfasst, der einerseits gelenkig, zentral am Arbeitsaggregat (5) angelenkt ist und andererseits am auskragenden Endabschnitt der ersten Lenkergruppe (10) angelenkt ist, sowie zwei seitliche Steuerlenker (16) umfasst, die einerseits voneinander beabstandet am Arbeitsaggregat (5) angelenkt und andererseits am auskragenden Endabschnitt der ersten Lenkergruppe (10) angelenkt sind.

12. Landwirtschaftliches Anbaugerät nach dem vorhergehenden Anspruch, wobei der zentrale Trägerlenker (15) sowie die beiden seitlichen Steuerlenker (16) an dem Arbeitsaggregat (5) sowie an dem auskragenden Endabschnitt der ersten Lenkergruppe (10) jeweils gelenkig befestigt und derart angeordnet sind, dass das Arbeitsaggregat (5) aus einer horizontalen Neutralstellung um eine liegende in Fahrtrichtung weisende Achse relativ zur ersten Lenkergruppe (10) wippbar ist und/oder mit rechten und linken Endabschnitten zueinander gegenläufig auf- und abbewegbar ist.

13. Landwirtschaftliches Anbaugerät nach dem vorhergehenden Anspruch, wobei die zweite Lenkergruppe (14) derart ausgebildet ist, dass das Arbeitsaggregat (5) mit seitlichen, rechten und linken Endabschnitten gegenläufig auf- und abbewegbar und dabei gleichzeitig in Fahrtrichtung gegenläufig vor- und zurückbewegbar ist, wobei eine Aufwärtsbewegung an einem seitlichen Endabschnitt mit einer Rückwärtsbewegung entgegen der Fahrtrichtung dieses Endabschnitts relativ zur ersten Lenkergruppe (10) einhergeht.

14. Landwirtschaftliches Anbaugerät nach einem der vorhergehenden Ansprüche, wobei, der Kraftgeber (22) einen Druckmittelzylinder umfasst, der aus mehreren unterschiedlich ausgebildeten, hintereinander oder parallel geschalteten Druckspeichern (32) druckbeaufschlagt ist derart, dass in unterschiedlichen Längenstellungen des Druckmittelzylinders unterschiedlicher Druck auf den Druckmittelzylinder geschaltet ist.

15. Landwirtschaftliches Anbaugerät nach einem der vorhergehenden Ansprüche, wobei der Kraftgeber (22) ein zumindest ein Federbein mit verschieden ausgebildeten Federn umfasst, die in verschiedenen Längenstellung-Bereichen des Federbeins aktiv sind.
